# EUROPEAN PATENT SPECIFICATION

(11) **EP 3 868 731 B1**
(45) Date of publication and mention of the grant of the patent: **14.12.2022**
(21) Application number: 20158612.0
(22) Date of filing: 20.02.2020
(51) Int. Cl.: C04B 35/047, C04B 35/626, C04B 35/628, C04B 35/634

(54) **GRAINS FOR THE PRODUCTION OF A SINTERED REFRACTORY PRODUCT, A BATCH FOR THE PRODUCTION OF A SINTERED REFRACTORY PRODUCT, A PROCESS FOR THE PRODUCTION OF A SINTERED REFRACTORY PRODUCT AND A SINTERED REFRACTORY PRODUCT**
KÖRNER ZUR HERSTELLUNG EINES GESINTERTEN FEUERFESTEN PRODUKTS, CHARGE ZUR HERSTELLUNG EINES GESINTERTEN FEUERFESTEN PRODUKTS, VERFAHREN ZUR HERSTELLUNG EINES GESINTERTEN FEUERFESTEN PRODUKTS UND GESINTERTES FEUERFESTES PRODUKT
GRAINS POUR LA PRODUCTION D'UN PRODUIT RÉFRACTAIRE FRITTÉ, LOT POUR LA PRODUCTION D'UN PRODUIT RÉFRACTAIRE FRITTÉ, PROCÉDÉ POUR LA PRODUCTION D'UN PRODUIT RÉFRACTAIRE FRITTÉ ET PRODUIT RÉFRACTAIRE FRITTÉ

(43) Date of publication of application: 25.08.2021
(73) Proprietor: Refractory Intellectual Property GmbH & Co. KG, 1100 Wien (AT)
(72) Inventor: Mancini Fonseca, Daniela, 8700 Leoben (AT); Neuböck, Rainer, 8010 Graz (AT); Wagner, Moulin-Silva, 3002 Purkersdorf (AT)
(74) Representative: Berkenbrink, Kai-Oliver

(56) References cited:
- GB-A- 1 439 253
- RU-C1- 2 634 140
- US-A- 4 023 786
- DATABASE WPI Week 198419 Thomson Scientific, London, GB; AN 1984-117235 XP002799972, & JP S59 54670 A (HARIMA TAIKA RENGA KK) 29 March 1984 (1984-03-29)

## Description

The invention relates to grains for the production of a sintered refractory product, a batch for the production of a sintered refractory product, a process for the production of a sintered refractory product and a sintered refractory product.

The term "refractory product" in the sense of the invention refers in particular to refractory products with an operating temperature above 600°C and preferably to refractory products in accordance with DIN 51060: 2006, i.e. materials with a pyrometric cone equivalent > SK17. The pyrometric cone equivalent can be determined in particular in accordance with DIN EN 993-12: 1997-06.

The term "sintered" in the sense of the invention expresses that the refractory product is a ceramic refractory product, i.e. a refractory product consisting of grains sintered together.

According to current practice, a "batch" is a composition of one or more components or raw materials by which a sintered refractory product can be produced by means of a temperature treatment, i.e. in particular by means of firing, for example in a furnace.

A common raw material for the production of sintered refractory products is, for example, magnesia-chromite. As is well known, magnesia-chromite is a raw material mainly based on the metal oxides magnesium oxide (MgO) and chromium oxide (Cr₂O₃) as well as the further oxides aluminum oxide (Al₂O₃), iron oxide (Fe₂O₃), calcium oxide (CaO) and silicon oxide (SiO₂). A raw material in the form of magnesia-chromite is particularly used for the production of sintered refractory products in the form of sintered refractory magnesia-chromite products. Such a product in the form of a sintered refractory magnesia-chromite product is referred to, as, e. g., a "magnesia-chromite product" or a "magnesia-chromite brick" in the art.

RU 2 634 140 C1 discloses a mixture of fused chromite-periclase grains and a dispersed magnesia component for the production of a refractory product.

It is well known that sintered refractory products are highly brittle. This brittleness of sintered refractory products manifests itself in a low structural elasticity and a correspondingly high modulus of elasticity of such sintered refractory products. Due to this low structural elasticity, sintered refractory products are highly sensitive to thermal stresses. In particular, such thermal stresses can lead to thermal spalling of refractory products.

In particular, sintered refractory products in the form of the above-mentioned magnesia-chromite products usually have a high modulus of elasticity, which can cause thermal spalling of the refractory when thermal stresses occur in the product. In particular, these thermal stresses in magnesia-chromite products mean that magnesia-chromite products generally have a relatively low thermal shock resistance.

In the past, there has therefore been no lack of attempts to reduce the modulus of elasticity of sintered refractory products, in particular sintered magnesia-chromite refractory products, in order to give them the best possible thermal shock resistance.

The invention has been defined in the appended claims 1-14.

One object of the invention is to provide a raw material for the production of a sintered refractory product by which the modulus of elasticity of the product can be reduced and thus the thermal shock resistance of the product can be improved. In particular, one object of the invention is to provide such a raw material in the form of grains.

In particular, one object of the invention is to provide a raw material for the production of a sintered refractory product in the form of a sintered refractory magnesia-chromite product by which the modulus of elasticity of the product can be reduced and thus its thermal shock resistance can be improved.

A further object of the invention is to provide a batch for the production of such a sintered refractory product comprising such a raw material.

A further object of the invention is to provide a method for the production of such a sintered refractory product.

A further object of the invention is to provide such a sintered refractory product with a low modulus of elasticity and thus an improved thermal shock resistance.

According to the invention, a raw material in the form of grains for the production of a sintered refractory product is provided, wherein said grains comprise a core of magnesia-chromite, wherein the surface of said core of magnesia-chromite has at least partially a chromium oxide comprising coating.

The invention is based in particular on the surprising finding that the modulus of elasticity of sintered refractory products can be reduced and, hence, the flexibility of sintered refractory products can be increased, if the batch used to produce these products comprises the grains according to the invention, i.e. grains comprising a core of magnesia-chromite, this core of magnesia-chromite having at least partially a coating comprising chromium oxide (i.e. Cr₂O₃).

In particular, it has been found out in accordance with the invention that the modulus of elasticity of sintered refractory products in the form of sintered magnesia-chromite refractory products can be substantially reduced and thus their resistance to thermal shock can be improved if a batch comprising the grains in accordance with the invention, i.e. grains comprising a core of magnesia-chromite having at least in portions of a coating comprising chromium oxide, is used for the manufacture of these products.

In this respect, the grains according to the invention constitute a raw material for the production of sintered refractory products, in particular sintered magnesia-chromite refractory products.

That the coating comprising chromium oxide "comprises" chromium oxide means, in the sense of the invention, that the coating has a chemical content of chromium oxide (Cr₂O₃). In this respect, chromium oxide can be present in the coating, for example, unbound but also in a bound, i.e., for example, mineral-bound form, for example in the form of pichrochromite. The coating comprising chromium oxide can be in the form of one component, for example in the form of chromium oxide green, i.e. nearly pure Cr₂O₃, or in the form of a mixture of several components, for example in the form of a mixture of chromium oxide green and chrome ore. According to the invention, it has been found that the grains according to the invention have a beneficial effect with respect to the reduction of the modulus of elasticity of a product produced using the grains already if the coating comprises chromium oxide only in a small proportion. However, according to the invention, it was also found that the advantageous effect of the grains in this respect increases with an increasing proportion of chromium oxide in the coating. In this respect, a coating which comprises the highest possible proportion of chromium oxide is particularly preferred. In this respect, it may be provided that the coating comprising chromium oxide comprises chromium oxide in a proportion in the range from 1 to 100% by mass, more preferably in a proportion in the range from 10 to 100% by mass, even more preferably in a proportion in the range from 20 to 100% by mass, even more preferably in a proportion in the range from 50 to 100% by mass, even more preferably in a proportion in the range from 80 to 100% by mass and even more preferably in a proportion in the range from 90 to 100% by mass. The figures given in % by mass are based on the total mass of the coating comprising chromium oxide. The chemical content of chromium oxide is determined according to DIN EN ISO 12677:2013.

A coating of chromium oxide in the form of chromium oxide green has proved to be particularly effective in reducing the modulus of elasticity, so that the chromium oxide comprising coating is preferably in the form of chromium oxide green or at least comprises chromium oxide green.

Furthermore, according to the invention, it has been found that the effect of the coating comprising chromium oxide for reducing the modulus of elasticity is particularly effective when the coating is present in a particularly fine-grained form. According to a particularly preferred embodiment, it is therefore provided that the coating comprising chromium oxide is present in the form of a powder. According to a preferred embodiment, at least 50% by mass of the coating comprising chromium oxide has a particle size of less than 0.7 µm. Even more preferably, at least 90% by mass of the coating comprising chromium oxide may have a particle size below 1.2 µm. The figures given in % by mass are based on the total mass of the chromium oxide coating. The grain size is determined according to ASTM E 1382-97 (reapproved 2004).

In accordance with the invention, it was found that the effect of the grains according to the invention reducing the modulus of elasticity already occurs when the core made of magnesia-chromite has a coating comprising chromium oxide at least partially, i.e. at least in sections of the surface of the core. However, it has been determined in accordance with the invention that the modulus of elasticity reducing effect of the grains is most effective when the magnesia-chromite core is completely coated with the coating comprising chromium oxide. Therefore, according to a preferred embodiment, it is provided that the surface of the magnesia-chromite core is completely coated with the chromium oxide comprising coating.

In accordance with the invention, it was found that the core of the grains according to the invention can effectively reduce the modulus of elasticity even if the chromium oxide coating is only very thin and, for example, has a thickness of only a few µm. From a thickness of the chromium oxide coating of at least 10 µm, however, the grains show a particularly strong reduction of the modulus of elasticity, so that the chromium oxide coating preferably has a thickness of at least 10 µm. Preferably, the coating of chromium oxide has a thickness in the range of 10 to 400 µm, even more preferably in the range of 70 to 200 µm. According to the invention, it was found that the coating comprising chromium oxide in such a thickness has the best effect in terms of reducing the modulus of elasticity of a product manufactured using the grains.

The core of magnesia-chromite of the grains according to the invention is present in the form of a grain or particle.

In particular, the core of magnesia-chromite may be in the form of a grain of magnesia-chromite, in particular in the form of a grain of magnesia-chromite as known from the state of the art, in particular, for example, as a raw material for the production of sintered refractory magnesia-chromite products.

For example, the core of magnesia-chromite may be present in at least one of the following forms: Sintered magnesia-chromite grain or fused magnesia-chromite grain.

Surprisingly, according to the invention, it was found that the grains according to the invention have the best effect of reducing the modulus of elasticity of a product manufactured using the grains when the core of magnesia-chromite is in the form of a fused magnesia-chromite grain. According to a particularly preferred embodiment, it is therefore provided that the core of magnesia-chromite is a fused grain. As is well known, a fused grain is a grain or particle obtained by crushing a cooled melt into grains.

According to the invention, it was found that the effect of reducing the modulus of elasticity and, hence, the effect of increasing the flexibility with the grains according to the invention is particularly good when the core of magnesia-chromite of the grains has a grain size of at least 1 mm. It is therefore preferred that the magnesia-chromite core has a grain size of at least 1 mm. Particularly, it can be provided according to the invention that at least 50% by mass of the grains according to the invention, and even more preferably at least 80% by mass of the grains have a core of magnesia-chromite having a grain size of at least 1 mm. Further, it can particularly be provided that at least 50% by mass of the grains according to the invention, and even more preferably at least 80% by mass of the grains have a core of magnesia-chromite having a grain size in the range of 1 to 5 mm. The figures given in % by mass are based on the total mass of the grains. The grain size is determined according to DIN 66165-2:2016-08.

The chemical composition of the magnesia-chromite core may correspond to the chemical composition of magnesia-chromite raw materials known from the state of the art. The magnesia-chromite cores preferably have a chemical composition with MgO in a proportion in the range of 30 to 80% by mass, more preferably in a proportion in the range of 50 to 70% by mass, and with Cr₂O₃ in a proportion in the range of 4 to 36% by mass, more preferably in a proportion in the range of 15 to 30% by mass. Preferably MgO and Cr₂O₃ are present in a total mass of at least 70% by mass, even more preferably at least 75% by mass and even more preferably at least 80% by mass in the core. The chemical remainder to 100% by mass preferably are one or more of the oxides Fe₂O₃, Al₂O₃, CaO, SiO₂ and TiO₂. The figures given in % by mass are based on the total mass of the cores of the grains according to the invention. The chemical composition is determined according to DIN EN ISO 12677:2013.

In order to improve the adhesion of the chromium oxide coating to the core of magnesia-chromite, it may be preferably being provided that the chromium oxide coating comprises a binder. Preferably, the chromium oxide coating comprises a temporary binder, preferably an organic binder or water. By a preferred embodiment, the chromium oxide coating comprises an organic binder in the form of polyvinyl alcohol.

A subject of this disclosure, which is not claimed, is also a method for the production of the grains according to the invention, the method comprising the following steps:
providing grains of magnesia-chromite;
providing a component comprising chromium oxide;
coating the surface of the grains of magnesia-chromite at least partially with the component comprising chromium oxide.

The magnesia-chromite grains provided for the method may have the features disclosed herein with regard to the magnesia-chromite core of the grains according to the invention. In this respect, with regard to the magnesia-chromite grains, reference is made to the features of the magnesia-chromite core of the grains according to the invention as disclosed herein.

The component comprising chromium oxide provided for the method may have the features disclosed herein with regard to the coating comprising chromium oxide of the grains according to the invention. In this respect, with regard to the chromium oxide comprising component, reference is made to the features of the chromium oxide comprising coating of the grains according to the invention as disclosed herein.

The magnesia-chromite grains provided for the method are preferably coated by the chromium oxide-comprising component in such a way that a thickness of the coating is obtained which corresponds to the thickness of the chromium oxide comprising coating of the grains according to the invention. The magnesia-chromite grains and the chromium oxide comprising component are preferably mixed in a mixer, preferably in an intensive mixer. Preferably, the magnesia-chromite grains to be coated and the component comprising chromium oxide are mixed together for such a period of time that the grains are coated with the chromium oxide component in a thickness that corresponds to the thickness of the chromium oxide comprising coating of the grains according to the invention.

Furthermore, in order to coat the magnesia-chromite grains with the chromium oxide comprising component, the grains and the chromium oxide comprising component are preferably mixed with a binder, preferably a temporary binder, preferably one of the aforementioned temporary binders, i.e. in particular an organic binder or water.

The mass fraction of the binder can, for example, be between 1 and 2% by mass, based on the total mass of the mixture of magnesia-chromite grains and the component comprising chromium oxide.

A subject of the invention is also a batch for the production of a sintered refractory product, the batch comprising the grains according to the invention.

In particular, the invention relates to a batch for the production of a sintered magnesia-chromite refractory product, such as a so-called magnesia-chromite refractory product or a magnesia-chromite refractory brick.

As mentioned above, it was found in accordance with the invention that a sintered refractory product produced from a batch according to the invention, in particular a sintered magnesia-chromite refractory product, has a particularly low modulus of elasticity and thus in particular also a very good thermal shock resistance. In accordance with the invention, it was determined that the modulus of elasticity of such a product can already be reduced if the batch on which the product is based comprises at least 1% by mass of grains in accordance with the invention. According to the invention, it can therefore be provided that the batch comprises at least 1% by mass of the grains according to the invention. A particularly strong decrease of the modulus of elasticity in the product was found if the batch on which the product is based comprises a proportion of at least 10% by mass of the grains according to the invention. In accordance with the invention, it may also be provided that the batch according to the invention consists only of the grains according to the invention. Furthermore, it was determined according to the invention that the products produced from the batch according to the invention have a particularly low modulus of elasticity if the batch on which the product is based comprises a proportion of the grains according to the invention in the range of 20 to 50% by mass. In this respect, according to a preferred embodiment, it may be provided that the batch according to the invention comprises the grains according to the invention in a proportion in the range of 10 to 100% by mass, even more preferably in a proportion in the range of 10 to 90 % by mass, even more preferably in a proportion in the range of 10 to 50% by mass and even more preferably in a proportion in the range of 20 to 50% by mass. The figures given in % by mass are based on the total mass of the batch.

The batch according to the invention may comprise a refractory material in addition to the grains according to the invention. This refractory material may in principle be any refractory material, which is used to produce a sintered refractory product. The refractory material may be comprised of one or more refractory components or raw materials according to the art, in particular one or more components used to produce a sintered refractory product.

In particular, the refractory material is preferably a refractory material which is used, according to the state of the art, to produce a sintered refractory product in the form of a sintered magnesia-chromite refractory product. In this respect, according to a preferred embodiment, it is provided that the refractory material of the batch according to the invention comprises magnesia-chromite.. Magnesia-chromite is particularly preferred in the form of at least one of the following raw materials: Sintered magnesia-chromite (i.e., in particular, sintered magnesia-chromite grains) or fused magnesia-chromite (i.e., in particular, fused magnesia-chromite grains). Refractory material in the form of magnesia-chromite is particularly preferred in the form of fused magnesia-chromite grains. Furthermore, it may be provided that the refractory material of the batch according to the invention comprises at least one of the following components in addition to magnesia-chromite: Chromite or magnesia. It is known that chromite and magnesia also form magnesia-chromite with each other and with magnesia-chromite during firing, so that the refractory material of the batch according to the invention may also comprise at least one of these components in addition to the grains according to the invention and magnesia-chromite. Basically, the refractory material is preferably a refractory material for the production of a sintered refractory magnesia-chromite product. In this respect, the refractory material is preferably a sinterable material, in particular in the form of grains.

Preferably, the batch according to the invention comprises the grains according to the invention in the aforementioned mass fraction, the remainder up to 100% by mass being the refractory material. In this respect, the batch according to the invention can comprise refractory material in a proportion in the range of 0 to 99% by mass, preferably in a proportion in the range of 0 to 90% by mass, even more preferably in a proportion in the range of 10 to 90% by mass, even more preferably in a proportion in the range of 50 to 90% by mass and even more preferably in a proportion in the range of 50 to 80% by mass. The figures given in % by mass are based on the total mass of the batch.

The refractory material of the batch according to the invention preferably comprises a proportion of magnesia-chromite in the range of 70 to 100% by mass, particularly preferably in the range of 70 to 90% by mass. Furthermore, the refractory material of the batch according to the invention preferably comprises a proportion of chromite in a proportion in the range of 0 to 15% by mass, even more preferably in a proportion in the range of 5 to 15% by mass. Furthermore, the refractory material of the batch according to the invention preferably comprises a proportion of magnesia in the range of 0 to 15% by mass, even more preferably in a proportion in the range of 5 to 15% by mass. The figures given in % by mass are based on the total mass of the refractory material.

Preferably, the refractory material of the batch according to the invention is provided in a small grain size. According to a preferred embodiment, the median grain size of the refractory material is smaller than the median grain size of the grains according to the invention. According to a preferred embodiment, in the batch according to the invention, the amount in % by mass of the grains of the refractory material having a grain size below 1 mm is larger than the amount in % by mass of the grains according to the invention having a grain size below 1 mm. The figures given in % by mass are based on the total mass of the batch. The grain size is determined according to DIN 66165-2:2016-08.

According to a preferred embodiment, the refractory material is provided with 90% by mass, according to one embodiment also with 100% by mass in a grain size of at most 5 mm, even more preferably in a grain size of at most 4 mm and even more preferably in a grain size of at most 3 mm. The figures given in % by mass are based on the total mass of the refractory material. The grain size is determined according to DIN 66165-2:2016-08.

A subject of the invention is also a method for the production of a sintered refractory product, the method comprising the following steps:
Providing the batch according to the invention;
firing the batch to produce a sintered refractory product.

The features of the method may be modified as set forth herein. The method may comprise one or several of the further features as set forth herein. Further, all features of the method, as set forth herein, may be combined with each other, either individually or in combination.

The batch according to the invention provided for carrying out the method according to the invention is preferably mixed before firing, preferably in a mixer, particularly preferred in a compulsory mixer. A binder, in particular an organic binder, especially a temporary organic binder, may be added to the batch during the mixing of the batch. In this respect, temporary binders known from the state of the art can be used in particular to bind batches for the production of a sintered refractory product. For example, the batch can be mixed with a temporary binder, for example an organic binder, for example lignosulfonate. Preferably, the batch is mixed with a binder in a proportion in the range of 2 to 4% by mass, based on the total mass of the batch without the binder.

The batch, possibly mixed and possibly with a binder, can then be formed, preferably by pressing, preferably at a pressure in the range of 80 - 200 MPa. For example, the batch can be pressed into a shaped, unfired body in the form of a so-called green body.

The batch, which may be shaped, can then be fired in such a way that the components of the batch, in particular the grains according to the invention and the components of the refractory material, sinter together to form a sintered refractory product. In this respect, the firing is a so-called ceramic firing, in which a sintered, i.e. ceramic, refractory product is fired from the batch. The temperature and duration of the firing shall be chosen by the skilled person in such a way that such a sintered refractory product is fired from the batch. The appropriate firing conditions can be easily set by the skilled person. According to the invention, firing temperatures in the range of 1,700 to 1,800°C can be provided. Furthermore, according to the invention, a burning time in the range of 6 to 10 hours (at the above range of temperatures) may be preferred.

According to the invention, it was found that the coating comprising chromium oxide on the grains according to the invention reacts during firing with MgO of the batch at least partially to form picrochromite (MgO · Cr₂O₃ or MgCr₂O₄). The sintered refractory product produced by the method according to the invention therefore comprises grains of magnesia-chromite surrounded at least partially by a shell of picrochromite. These magnesia-chromite grains are formed from the magnesia-chromite core of the grains according to the invention, while the shell comprising picrochromite is formed by a reaction of the coating comprising chromium oxide on the grains according to the invention with MgO in batch. This MgO, with which the coating comprising chromium oxide reacts to form picrochromite, originates from the components of the batch, i.e. in particular the magnesia-chromite grains of the grains according to the invention or the refractory material of the batch.

A subject of the invention is also a sintered refractory product, the product comprising the following features:
The product comprises grains of magnesia-chromite;
at least some of the magnesia-chromite grains are surrounded at least partially by a picrochromite comprising shell.

The sintered refractory product according to the invention may in particular be a product produced by the method according to the invention or the process according to the invention may in particular serve to produce a product according to the invention.

The grains of magnesia-chromite of the product according to the invention surrounded by the shell comprising picrochromite may be surrounded by the shell at least partially, i.e. at least in sections, but preferably completely. The magnesia-chromite grains may be embedded like a core in the picrochromite comprising shell.

According to a particularly preferred embodiment, the picrochromite comprising shell surrounds the magnesia-chromite grains at least partially detached from the magnesia-chromite grains. In other words: A detachment, i.e. a gap, may be provided at least partially between the magnesia-chromite grains and the shell. In accordance with the invention, it was surprisingly found that a sintered refractory product according to the invention in this case has a particularly low modulus of elasticity and thus a very good thermal shock resistance. In accordance with the invention, it was found that a sintered refractory product according to the invention has a particularly low modulus of elasticity if a porous layer is formed between the grain of magnesia-chromite and the shell comprising picrochromite surrounding this grain. The inventors assume that this porous layer constitutes a kind of "elastic buffer" between the magnesia-chromite grain and the shell comprising picrochromite, which gives the product according to the invention a particularly low modulus of elasticity.

The magnesia-chromite grains of the sintered refractory product according to the invention may preferably have the features of the magnesia-chromite grains of the invention as disclosed therein, in particular their chemical composition and grain size. In this respect, as regards magnesia-chromite grains, reference is made to the features of the magnesia-chromite cores of the grains of the invention as disclosed herein.

The sintered refractory product according to the invention may, in addition to the magnesia-chromite grains which are surrounded by a shell comprising picrochromite according to the invention, of course also include other magnesia-chromite grains which are not surrounded by such a shell.

It is preferred that the sintered refractory product according to the invention comprises grains of magnesia-chromite surrounded by a shell comprising picrochromite in a proportion in the range of 1 to 100% by mass, preferably in a proportion in the range of 10 to 100% by mass, particularly preferred in a proportion in the range of 10 to 90% by mass, even more preferred in a proportion in the range of 10 to 50% by mass and even more preferred in a proportion in the range of 20 to 50% by mass. The figures given in % by mass are based on the total mass of the sintered refractory product.

Preferably, the picrochromite comprising shell has a thickness in the range of 10 to 400 µm, even more preferably in the range of 70 to 200 µm.

In addition to the magnesia-chromite grains, which have a picrochromite-comprising shell, the sintered refractory product according to the invention may comprise other refractory materials, in particular sintered refractory material. This sintered refractory material may in particular be formed from the refractory material of the batch according to the invention.

The grains of magnesia-chromite of the sintered refractory product according to the invention, enclosed by the shell comprising picrochromite, may preferably be embedded in a sintered matrix, in particular a sintered matrix formed from such a refractory material.

In particular, the grains of magnesia-chromite surrounded by the picrochromite comprising shell according to the invention may be embedded in a sintered matrix based on magnesia-chromite.

In addition to the grains of magnesia-chromite surrounded by the picrochromite comprising shell according to the invention, the sintered refractory product according to the invention can preferably comprise refractory material, in particular sintered refractory material in a proportion in the range of 10 to 90% by mass, even more preferably in a proportion in the range of 50 to 90% by mass and even more preferably in a proportion in the range of 50 to 80% by mass. The figures given in % by mass are based on the total mass of the sintered refractory product.

According to a particularly preferred embodiment, the sintered refractory product according to the invention is a sintered magnesia-chromite refractory product.

Preferably, the sintered refractory product according to the invention has a chemical composition with MgO in a proportion in the range of 30 to 80% by mass, particularly preferably in a proportion in the range of 50 to 70% by mass, and a proportion of Cr₂O₃ in the range of 4 to 36% by mass, particularly preferably in a proportion in the range of 15 to 30% by mass. The figures given in % by mass are based on the total mass of the sintered refractory product. The chemical composition is determined according to DIN EN ISO 12677:2013.

The total chemical content of MgO and Cr₂O₃ in the product according to the invention is preferably at least 70% by mass, even more preferably at least 75% by mass and even more preferably at least 80% by mass. In addition to MgO and Cr₂O₃, the product according to the invention may comprise a remainder of up to 100% by mass in the form of one or more of the following further oxides: Fe₂O₃, Al₂O₃, CaO, SiO₂ and TiO₂. Preferably, the total mass of these oxides may be in the range of 10 to 30% by mass. According to one embodiment, the product is provided to have a chemical composition with Fe₂O₃ in the range of 5 - 15% by mass. According to one embodiment, the product is provided to have a chemical composition with Al₂O₃ in the range of 2 - 8% by mass. According to one embodiment, the product is provided to have a chemical composition with CaO < 2% by mass, SiO₂ < 2% by mass and TiO₂< 1% by mass. The figures given in % by mass are based on the total mass of the sintered refractory product. The chemical composition is determined according to DIN EN ISO 12677:2013.

At the same time, the sintered refractory product according to the invention is characterized by high corrosion resistance. This is all the more surprising against the background of the well-known fact that sintered refractory products usually have either a low modulus of elasticity and simultaneously a low corrosion resistance or a high modulus of elasticity and simultaneously a high corrosion resistance. The high corrosion resistance of a sintered refractory product according to the invention is further disclosed in the following example of the invention.

The sintered refractory product according to the invention is preferably used in ferrous metallurgy, for example in the secondary steel refining or in a RH-degasser, or non-ferrous metallurgy.

Further features of the invention result from the claims and the example of implementation of the invention described below.

All examples of the invention may be combined with each other, individually or in combination.

In the following example of the invention and the comparative examples, the chemical composition is determined according to DIN EN ISO 12677:2013, the grain size is determined according to DIN 66165-2:2016-08, the grain size of the coating of chromium oxide is determined according to ASTM E 1382-97 (Reapproved 2004) and the modulus of elasticity according to DIN EN 843-2:2007-03.

### Exemplary embodiment

### Example of a method for producing the grains according to the invention

Grains of magnesia-chromite with a grain size in the range of 2 to 4 mm were provided.

The grains of magnesia-chromite were magnesia-chromite fused grains.

The magnesia-chromite grains had the following chemical composition, based on the total mass of the magnesia-chromite grains:

| | |
|---|---|
| MgO: | 56.5% by mass |
| Cr₂O₃: | 21.0% by mass |
| Fe₂O₃: | 13.0% by mass |
| Al₂O₃: | 7.5% by mass |
| CaO: | 0.8% by mass |
| SiO₂: | 0.8% by mass |
| Others: | 0.4% by mass |

A powder comprising chromium oxide in the form of chromium oxide green powder was provided for coating the aforementioned magnesia-chromite grains. The chromium oxide green powder had the following chemical composition, based on the total mass of the chromium oxide green powder:

| | |
|---|---|
| Cr₂O₃: | 99.5% by mass |
| Na₂O: | 0.4% by mass |
| Others: | 0.1% by mass |

The chromium oxide green powder had a grain size with 90% by mass below 1.2 µm, 50% by mass below 0.7 µm and 10% by below 0.4 µm, in each case based on the total mass of the chromium oxide green powder.

The grains of magnesia-chromite were put into a mixer and the mixer was started. A quantity of 1.5% by mass of a binder, based on the total mass of the grains of magnesia-chromite without the binder, was then added to the grains of magnesia-chromite in the mixer. The binder consisted of an aqueous solution of polyvinyl alcohol.

The chromium oxide green powder was then slowly added to the magnesia-chromite grains prepared with the binder in the mixer. As a result, a chromium oxide green coating was formed from the chromium oxide green powder on the magnesia-chromite grains. This addition of chromium oxide green powder to the mixer was continued until the chromium oxide green powder built up a coating on the magnesia-chromite grains with a thickness of about 70 - 200 µm.

### Example of the coated grains

The previously described example of a method for the production of coated grains resulted in coated grains of magnesia-chromite, the surface of which being completely coated with a chromium oxide green coating.

These resulting coated grains embodied an exemplary embodiment of the grains according to the present invention with the coated magnesia-chromite grain being the core and the chromium oxide coating being a chromium oxide comprising coating of the grains according to the invention.

### Example of a batch

An exemplary embodiment of a batch according to the invention was produced, which comprised the coated grains according to the above exemplary embodiment.

These coated grains were mixed with a refractory material and a binder to form a batch.

The refractory material of the batch consisted of fused magnesia-chromite grains, sinter magnesia grains and chromite grains.

The binder was a temporary organic binder in the form of a lignosulfonate.

The coated grains and the refractory material were put into a mixer in the following proportions by mass, in each case relative to the total mass of the batch, to form a batch:

| | |
|---|---|
| Coated grains: | 36% by mass |

### Refractory Material:

| | |
|---|---|
| Fused magnesia-chromite grains < 2.0 mm: | 51% by mass |
| Chromite grains < 2.0 mm: | 7% by mass |
| Sinter magnesia grains (ball mill fines): | 6% by mass |

Subsequently, the binder was added to the batch in a proportion of 2.8% by mass, based on the batch without the binder.

The components were then mixed in the mixer to form a batch.

### Example of a method for the production of a sintered refractory product

The batch obtained after mixing was removed from the mixer and pressed in a press at a pressure of 150 MPa. A green body was then obtained.

The green body, i.e. the pressed batch, was then fired at a temperature of 1,730°C for 8 hours.

During firing, the components of the batch sintered together to form a sintered, i.e. ceramic refractory product in the form of a sintered refractory magnesia-chromite product.

Furthermore, during firing, the coating of chromium oxide green of the coated grains reacted in-situ with magnesia of the batch (i.e. magnesia from the magnesia-chromite core as well as magnesia from the fused magnesia-chromite grains and the sinter magnesia of the refractory material) to form picrochromite. This picrochromite built up a shell which fully surrounded the grains of magnesia-chromite of the coated grains, i.e. the core of magnesia-chromite of the coated grains.

After firing, the product was in the form of a sintered refractory product according to the invention.

In this product, the above coated grains with a core of a magnesia-chromite grains, fully surrounded by a shell of picrochromite, were embedded in a sintered matrix which was built up by the sintered components of the refractory material.

The chemical composition of the product, corresponding to the chemical composition of the batch, was determined to be as follows, wherein the figures given in % by mass are based on the total mass of the product:

| | |
|---|---|
| MgO: | 59.6% by mass |
| Cr₂O₃: | 23.7% by mass |
| Fe₂O₃: | 9.6% by mass |
| Al₂O₃: | 5.3% by mass |
| CaO: | 0.87% by mass |
| SiO₂: | 0.68% by mass |
| TiO₂: | 0.16% by mass |
| LOI: | 0.09% by mass |

### Determining of the modulus of elasticity

The modulus of elasticity of the product has been determined according to DIN EN 843-2:2007-03.

For the measurement, prisms with the dimensions 15 x 20 x 120 mm have been prepared from the product and used for the measurement.

Accordingly, the modulus of elasticity was determined to be 3437 N/mm² only.

### Figure

In order to illustrate the microstructure of the product, a micrograph of a cut of the product was taken.

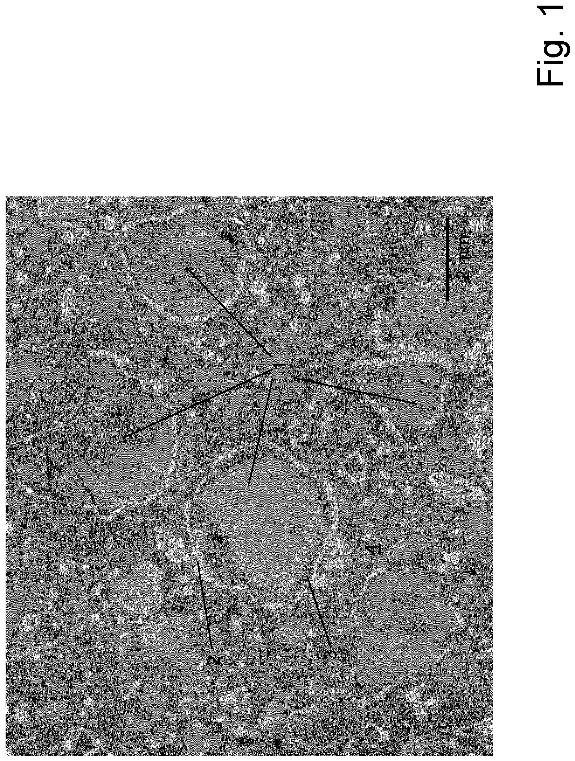

- Figure 1: shows said picture of said cut of the product.

The black bar at the bottom right of figure 1 corresponds to a length of 2 mm.

Figure 1 shows a plurality of magnesia-chromite grains 1, with some of them surrounded by a shell 2 comprising picrochromite (marked for one grain 1 only).

The shell 2 is at least partially detached from the respective grain 1 surrounding it. In the gap between the grain 1 and the shell 2, a highly porous layer 3 is formed.

The grains 1 with the shell 2 are embedded in said sintered matrix 4 which was built up by the sintered components of the refractory material.

### Comparative examples

### Comparative Example 1

For the purpose of comparison, a sintered refractory product was produced according to the above exemplary embodiment which differed from the exemplary embodiment only in such as the coated grains according to the exemplary embodiment were replaced by fused magnesia-chromite grains, these fused magnesia-chromite grains being identical to the fused magnesia-chromite grains according to the core of the coated grains.

The chemical composition of the product was determined to be as follows, wherein the figures given in % by mass are based on the total mass of the product:

| | |
|---|---|
| MgO: | 59.6% by mass |
| Cr₂O₃: | 19.8% by mass |
| Fe₂O₃: | 11.5% by mass |
| Al₂O₃: | 6.9% by mass |
| CaO: | 0.82% by mass |
| SiO₂: | 0.80% by mass |
| TiO₂: | 0.24% by mass |
| LOI: | 0.34% by mass |

The modulus of elasticity of the product was measured as set forth above for the exemplary embodiment and determined to be 8190 N/mm². Accordingly, the modulus of elasticity of the sintered refractory product which was not produced in accordance with the invention was much higher than for the product which was produced in accordance with the present invention according to the exemplary embodiment.

### Comparative Example 2

For the purpose of comparison, a further sintered refractory product was produced according to the above exemplary embodiment which differed from the exemplary embodiment only in such as the coated grains according to the exemplary embodiment were replaced by fused magnesia-chromite grains, these fused magnesia-chromite grains being identical to the fused magnesia-chromite grains according to the core of the coated grains. Further, this sintered refractory product according to comparative example 2 comprised chromium oxide green in an amount according to exemplary embodiment 1. However, the product did not comprise this chromium oxide green as a coating, but as a component which was added to the batch when mixing the components in order to provide a batch. This was done particularly in order to determine whether the corrosion properties of the sintered refractory product, produced from a batch, depend on whether the chromium oxide green is present in the batch as a coating on a magnesia-chromite core or as a powder distributed over the entire batch.

### Corrosion test

In order to determine the corrosion resistance of the sintered refractory products in accordance with the exemplary embodiment and comparative examples 1 and 2, a corrosion finger test was carried out in an induction furnace.

For this purpose, the sintered refractory products according to the exemplary embodiment and comparative examples 1 and 2 were each provided in the form of rods with a rectangular cross-section and an edge length of 20 x 25 mm. These rods were suspended in a crucible located in an induction furnace and the crucible was then filled with a corrosive powder which corresponded to a non-ferrous slag in its chemical composition. The chemical composition of the powder was as follows, the figures in % by mass being based on the total mass of the powder:

| | |
|---|---|
| MgO: | 1.0% by mass |
| Al₂O₃: | 3.4% by mass |
| SiO₂: | 27.7% by mass |
| CaO: | 1.3% by mass |
| Cr₂O₃: | 0.3% by mass |
| Fe₂O₃: | 41.1% by mass |
| Na₂O: | 0.5% by mass |
| SO₃: | 1.1% by mass |
| CuO: | 5.2% by mass |
| PbO: | 7.4% by mass |
| SnO₂: | 1.4% by mass |
| ZnO: | 8.1% by mass |
| TiO₂: | 0.1% by mass |
| Others: | 1.4% by mass |

The powder was then melted in said crucible at 1.400°C and the rods were left in the melt formed from the powder for 7 hours. During this time the rods were rotated around their longitudinal axis at a speed of 9 rpm.

The rods were then removed from the melt and cooled.

All rods then showed corrosion caused by the melt.

To quantify the extent of corrosion, the minimum remaining thickness of the rod along the longitudinal edge of the rod, having an edge length of 25 mm, was determined.

Accordingly, said minimum remaining thickness of the rod was then as follows:
Rod made from the sintered refractory product

| | |
|---|---|
| according to the exemplary embodiment: | 18.0 mm |

Rod made from the sintered refractory product

| | |
|---|---|
| according to comparative example 1: | 15.8 mm |

Rod made from the sintered refractory product

| | |
|---|---|
| according to comparative example 2: | 16.8 mm |

Accordingly, the rod made from the sintered refractory product according to the exemplary embodiment according to the invention showed a significantly lower corrosion than the rods made from the sintered refractory product according to comparative examples 1 and 2.

## Claims

1. Grains for the production of a sintered refractory product, wherein said grains comprise a core of magnesia-chromite, wherein the surface of said core of magnesia-chromite has at least partially a chromium oxide comprising coating.

2. The grains according to claim 1, wherein said chromium oxide comprising coating is chromium oxide green.

3. The grains according to at least one of the preceding claims, wherein said chromium oxide comprising coating is present as a powder.

4. The grains according to at least one of the preceding claims, wherein said chromium oxide comprising coating has a thickness of at least 10 µm.

5. The grains according to at least one of the preceding claims, wherein said chromium oxide comprising coating has a thickness in the range from 10 to 400 µm.

6. The grains according to at least one of the preceding claims, wherein said core of magnesia-chromite is a fused grain.

7. A batch for the production of a sintered refractory product, wherein said batch comprises grains according to at least one of claims 1-6.

8. The batch according to claim 7, comprising at least 1 % by weight of said grains, in relation to the total weight of the batch.

9. The batch according to at least one of claims 7-8, further comprising a refractory material, wherein said refractory material comprises magnesia-chromite grains.

10. The use of the batch according to claim 7 for the production of a sintered refractory magnesia-chromite product.

11. A process for the production of a sintered refractory product, the process comprising the following steps:
11.1 Providing the batch according to at least of one of claims 7-9;
11.2 firing the batch to produce a sintered refractory product.

12. A sintered refractory product, the product comprising the following features:
12.1 The product comprises magnesia-chromite grains;
12.2 at least some of said magnesia-chromite grains are surrounded at least partially by a picrochromite comprising shell.

13. The product according to claim 12, wherein said picrochromite comprising shell surrounds said magnesia-chromite at least partially detached from said magnesia-chromite grains.

14. The product according to at least one of claims 12-13, wherein the product has a chemical composition with MgO in the range from 30 to 80 % by mass and with Cr₂O₃ in the range from 4 to 36 % by mass, in relation to the total weight of the product.

## Patentansprüche

1. Körner für die Herstellung eines gesinterten feuerfesten Erzeugnisses, wobei die Körner einen Kern aus Magnesia-Chromit umfassen, wobei die Oberfläche des Kerns aus Magnesia-Chromit zumindest teilweise eine Chromoxid umfassende Beschichtung aufweist.

2. Körner nach Anspruch 1, wobei die Chromoxid umfassende Beschichtung Chromoxidgrün ist.

3. Körner nach wenigstens einem der vorhergehenden Ansprüche, wobei die Chromoxid umfassende Beschichtung als Pulver vorliegt.

4. Körner nach wenigstens einem der vorhergehenden Ansprüche, wobei die Chromoxid umfassende Beschichtung eine Dicke von mindestens 10 µm aufweist.

5. Körner nach wenigstens einem der vorangehenden Ansprüche, wobei die Chromoxid umfassende Beschichtung eine Dicke im Bereich von 10 bis 400 µm aufweist.

6. Körner nach wenigstens einem der vorhergehenden Ansprüche, wobei der Kern aus Magnesia-Chromit ein geschmolzenes Korn ist.

7. Versatz zur Herstellung eines gesinterten feuerfesten Erzeugnisses, wobei der Versatz Körner nach wenigstens einem der Ansprüche 1 bis 6 umfasst.

8. Versatz nach Anspruch 7, der wenigstens 1 Masse-% der Körner, bezogen auf das Gesamtgewicht des Versatzes, umfasst.

9. Versatz nach wenigstens einem der Ansprüche 7-8, das ferner ein feuerfestes Material umfasst, wobei das feuerfeste Material Magnesia-Chromit-Körner umfasst.

10. Verwendung des Versatzes nach Anspruch 7 zur Herstellung eines gesinterten feuerfesten Magnesia-Chromit-Erzeugnisses.

11. Verfahren zur Herstellung eines gesinterten feuerfesten Erzeugnisses, wobei das Verfahren die folgenden Schritte umfasst:
11.1 Bereitstellen des Versatzes nach wenigstens einem der Ansprüche 7-9;
11.2 Brennen des Versatzes zur Herstellung eines gesinterten feuerfesten Erzeugnisses.

12. Ein gesintertes feuerfestes Erzeugnis, wobei das Erzeugnis die folgenden Merkmale umfasst:
12.1 Das Produkt umfasst Magnesia-Chromit-Körner;
12.2 zumindest einige der Magnesia-Chromit-Körner sind zumindest teilweise von einer Picrochromit umfassenden Hülle umgeben.

13. Erzeugnis nach Anspruch 12, wobei die Pikrochromit umfassende Hülle das Magnesia-Chromit zumindest teilweise von den Magnesia-Chromit-Körnern losgelöst umgibt.

14. Erzeugnis nach wenigstens einem der Ansprüche 12 bis 13, wobei das Erzeugnis eine chemische Zusammensetzung mit MgO im Bereich von 30 bis 80 Masse-% und mit Cr₂O₃ im Bereich von 4 bis 36 Masse-%, bezogen auf das Gesamtgewicht des Erzeugnisses, aufweist.

## Revendications

1. Grains pour la production d'un produit réfractaire fritté, dans lesquels lesdits grains comprennent un noyau de magnésie-chromite, dans lesquels la surface dudit noyau de magnésie-chromite possède au moins partiellement un revêtement comprenant de l'oxyde de chrome.

2. Grains selon la revendication 1, dans lesquels ledit revêtement comprenant de l'oxyde de chrome est le vert d'oxyde de chrome.

3. Grains selon au moins l'une des revendications précédentes, dans lesquels ledit revêtement comprenant de l'oxyde de chrome est présent sous forme de poudre.

4. Grains selon au moins l'une des revendications précédentes, dans lesquels ledit revêtement comprenant de l'oxyde de chrome possède une épaisseur d'au moins 10 µm.

5. Grains selon au moins l'une des revendications précédentes, dans lesquels ledit revêtement comprenant de l'oxyde de chrome possède une épaisseur dans la plage allant de 10 à 400 µm.

6. Grains selon au moins l'une des revendications précédentes, dans lesquels ledit noyau de magnésie-chromite est un grain fondu.

7. Lot pour la production d'un produit réfractaire fritté, dans lequel ledit lot comprend des grains selon au moins l'une des revendications 1 à 6.

8. Lot selon la revendication 7, comprenant au moins 1 % en poids desdits grains, par rapport au poids total du lot.

9. Lot selon au moins l'une des revendications 7 à 8, comprenant en outre un matériau réfractaire, dans lequel ledit matériau réfractaire comprend des grains de magnésie-chromite.

10. Utilisation du lot selon la revendication 7 pour la production d'un produit de magnésie-chromite réfractaire fritté.

11. Procédé de production d'un produit réfractaire fritté, le procédé comprenant les étapes suivantes :
11.1 fourniture du lot selon au moins l'une des revendications 7 à 9 ;
11.2 cuisson du lot pour produire un produit réfractaire fritté.

12. Produit réfractaire fritté, le produit comprenant les caractéristiques suivantes :
12.1 le produit comprend des grains de magnésie-chromite ;
12.2 au moins certains desdits grains de magnésie-chromite sont entourés au moins partiellement d'une enveloppe comprenant de la picrochromite.

13. Produit selon la revendication 12, dans lequel ladite enveloppe comprenant de la picrochromite entoure ladite magnésie-chromite au moins partiellement détachée desdits grains de magnésie-chromite.

14. Produit selon au moins l'une des revendications 12 à 13, dans lequel le produit a une composition chimique avec du MgO dans la plage allant de 30 à 80 % en masse et avec du Cr₂O₃ dans la plage allant de 4 à 36 % en masse, par rapport au poids total du produit.
